# EUROPEAN PATENT SPECIFICATION

(11) **EP 1 446 986 B1**
(45) Date of publication and mention of the grant of the patent: **26.12.2007**
(21) Application number: 02788921.1
(22) Date of filing: 06.11.2002
(51) Int. Cl.: H05B 37/02

(54) **THE ELECTRONIC SWITCH FOR LIGHTING LAMP THAT HAS SECURITY FUNCTION**
ELEKTRONISCHER SCHALTER FÜR EINE LAMPE MIT SICHERHEITSFUNKTION
COMMUTATEUR ELECTRONIQUE DESTINE A UNE LAMPE D'ECLAIRAGE POSSEDANT UNE FONCTION DE SECURITE

(30) Priority: 06.11.2001 KR 2001069015
(43) Date of publication of application: 18.08.2004
(73) Proprietor: Haga Electronics Co., Ltd., Youngdeungpo-Gu, Seoul 150-057 (KR)
(72) Inventor: KIM, Jihn-Kuk, Seoul 137-060 (KR)
(74) Representative: Gervasi, Gemma
(86) International application number: PCT/KR2002/002070
(87) International publication number: WO 2003/041454

(56) References cited:
- EP-A- 0 738 100
- EP-A- 0 825 500
- WO-A-96/11561
- WO-A-96/27823
- JP-A- 3 257 791
- JP-A- 2000 021 580
- JP-A- 2000 340 368
- KR-A- 19980 075 672
- KR-Y1- 200 146 641
- US-A- 5 808 294

## Description

### Technical fields

The invention introduction is " the method of performing the security Function of the Switch and the Switch itself" [hereinafter, "The Switch"]. The Switch can substitute the existing mechanic switch, of which the sole function is to turn on and off Lamps, and has a one-touch security Function. Normally, night thieves watch for houses where lamps are turned off. Therefore, turning lamps on in the early evening can prevent thieves. When leaving home for a long time or when you expect to come home late, use the security Function.

### Background Art

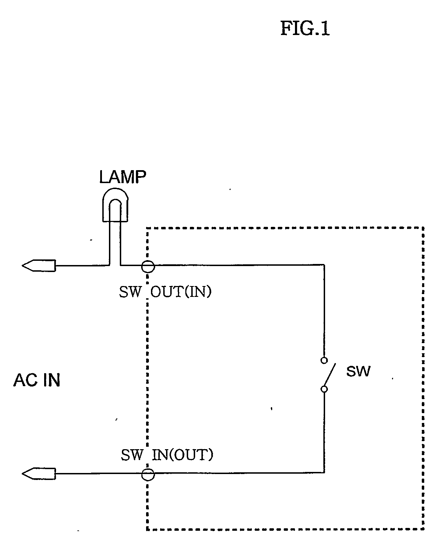

As shown by <Figure 1>, if you turn the Switch on for 24 hours, it needs much electric power, and thieves may look for houses where Lamps are turned on 24 hours a day. If using The Switch equipped with clock functions to turn on Lamps at scheduled times only, it is necessary to adjust time and schedules again after power failures.

Apparatuses and methods for controlling the lamp turn On and turn Off based on the ambient light intensity are disclosed in the state of the art. International patent application n. WO9627823, describes a method for controlling a switch on the basis of prevailing light intensity so that the switch is turned on when the light intensity falls below a set threshold value and it is turned off when the light intensity exceeds the set threshold value. The method is implemented as follows: when a stable change in the prevailing light intensity is detected, this is interpreted as being morning or evening, then from these moments sunrise and sunset times may be calculated and a clock is synchronised according to them thus achieving the daily timing of the switch and the consequent control of the switching of the load.

The present invention introduces an improvement of the above solution providing a simple method for controlling the switching On and Off of a lamp according to the ambient light intensity.

### Disclosure of Invention

With the help of this invention, " users of the Switch" (hereinafter, "Users") can easily operate "the security Function of The Switch" using the one-touch function.

Another purpose of this Invention is to provide "The Switch" which has normal on-off functions and security Function.

The features of The Switch are that, if the security Function is set on, the security Function status is shown by its LED lamp and with the luminance sensor [CDS] distinguishes day time and night time. It turns lamps off during day time and turns Lamps on for four or five hours in the evening after sunset and turns them on again in the early morning before sunset only, for one or two hours. The product has an on-off key to turn Lamps on or off, a security Function key, a LED lamp and a light sensor to distinguish night and day, and to operate a 24 hour clock in itself.

Therefore, users can easily turn the Lamps on or off, and set security status using its one touch function.

Refer to attached drawings for detailed practical and desirable usages.

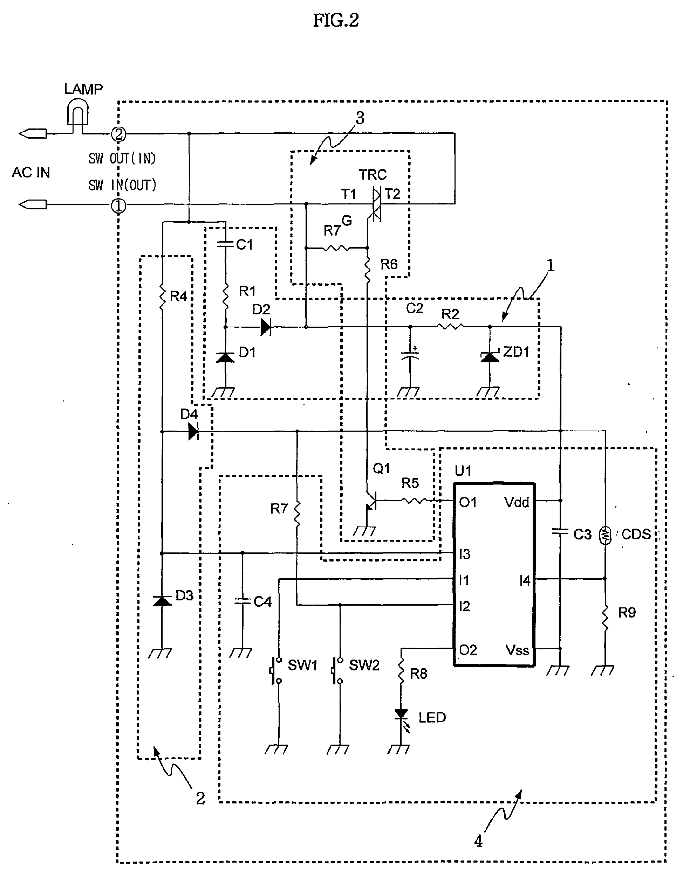

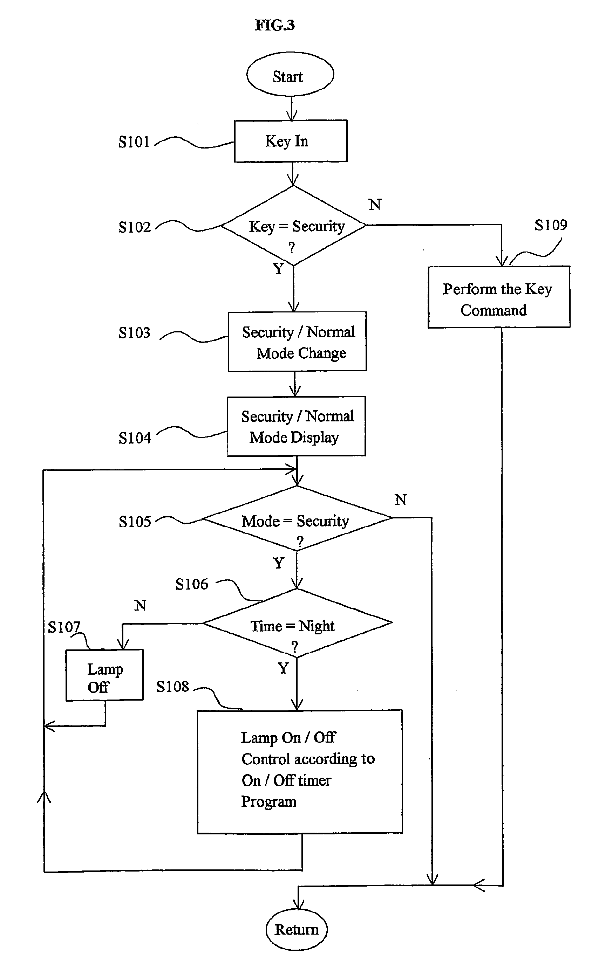

<Figure 1 > shows a normal wall Switch, and <Figure 2> is the circuit configuration of the Switch adopting this invention. Terminal (1) and (2) in <Figure 2> link switch lines on walls. Drawing mark 1 is the driving power circuit block of the Switch, and Drawing mark 2 is a circuit block to detect the phase of AC input. Drawing mark 3 is Triac [TRC] and its driving circuit block to switch Lamps, and Drawing mark 4 is a control Micom and its surround circuit block, which controls the operation of the Switch. The terminal O1and 02 of Micom are output terminals, and I1 ~ I4 are input terminals. When No. 1 output [O1] is Logic 1 [High], Triac [TRC] is turned On to turn on Lamp, and when No.1 output [O1] is Logic 0 [Low], Triac [TRC] is turned Off to turn off Lamp. The fourth input terminal [14] of Micom [U1] is an analog input terminal to detect luminance, and No. 1 and No. 2 input terminals [I1 ~ I2] are Key input terminals. If No. 2 output [O2] is high, LED turns on and the Security Mode is set. And No. 2 output [O2] is low, LED turns off and the security mode is changed to normal mode. Pushing SW2 makes the setting status change. Under Normal Mode, SW1 is used to turn the Lamp on or off, and, Micom[U1] detects luminance to operate its 24 hr clock, and controls the Lamp using its on-off timer program. Micom[U1] sets A.M. 12:00 as a central point between dawn and early evening, and sets P.M. 12:00 as a central point between early evening and dawn to operate the 24 hr clock. Under Security Mode, the Lamp is on for four or five hours during the evening, once or twice for brief times around midnight, and for one or two hours during the early morning. <Figure 3> is the Flow Chart of the Switch showing the method for performing the unique security function of this invention.

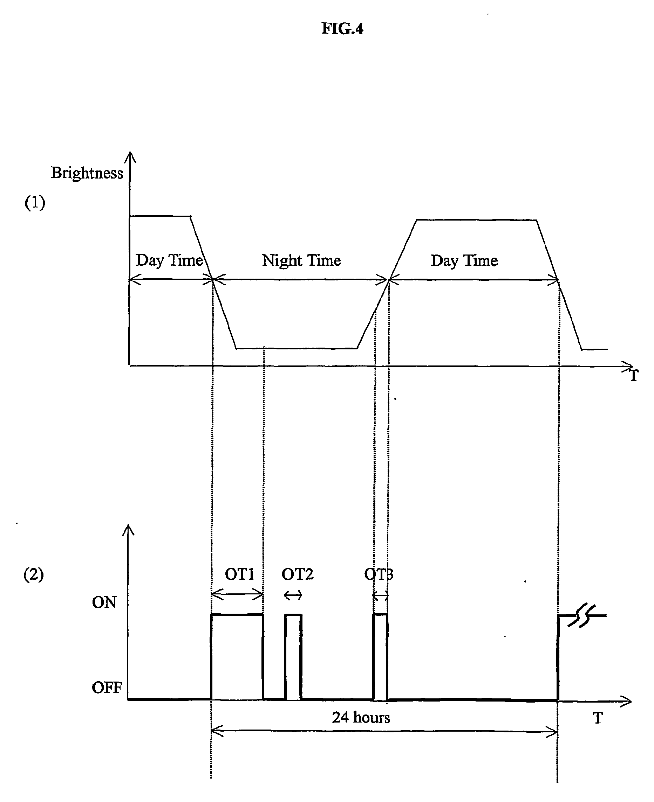

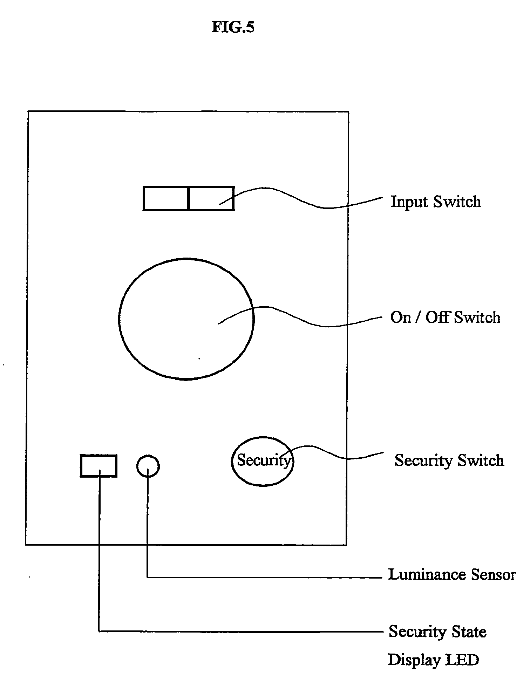

When a key is inputted [S101], whether the key is security key or not is determined [S102]. If it is not the Security Mode key, then appropriate orders are performed. If it is Security Mode key, Mode is changed from Security to Normal or Normal to Security [S103], and then changed status is shown [S104]. If the status is Normal Mode, then waiting for another key input, regarding given orders have been completely performed. If the changed status is Security Mode, Micom determines whether it is day or night using the 24 hr clock [S106]. If it is daytime, it turns the Lamps off [S107], and checks Security or Normal Modes [S105]. If it is nighttime, the Lamp is controlled by the On/off Timer Program in U1 [S108], and Security or Normal Modes are checked [S105]. <Figure 4> (1) shows that Micom[U1] detects luminance using CDS to determine whether it is day or night, and <Figure 4> (2) shows output Timing Drawing when adopted this security Function. <Figure 5> shows one of the exterior view of the Switch.

As described above, using the Switch, Users can easily operate the security Function using the one touch button. The function is operated by the 24 hr clock, made by determing daytime and night time using luminance sensor and the On-Off Timer Program in U1. Because, the Switch itself determines when to turn the Lamps on or off automatically and turn the lamps off in day time this invention gives energy saving effect and convineance to the user of the switch.

### Brief Description of Drawings

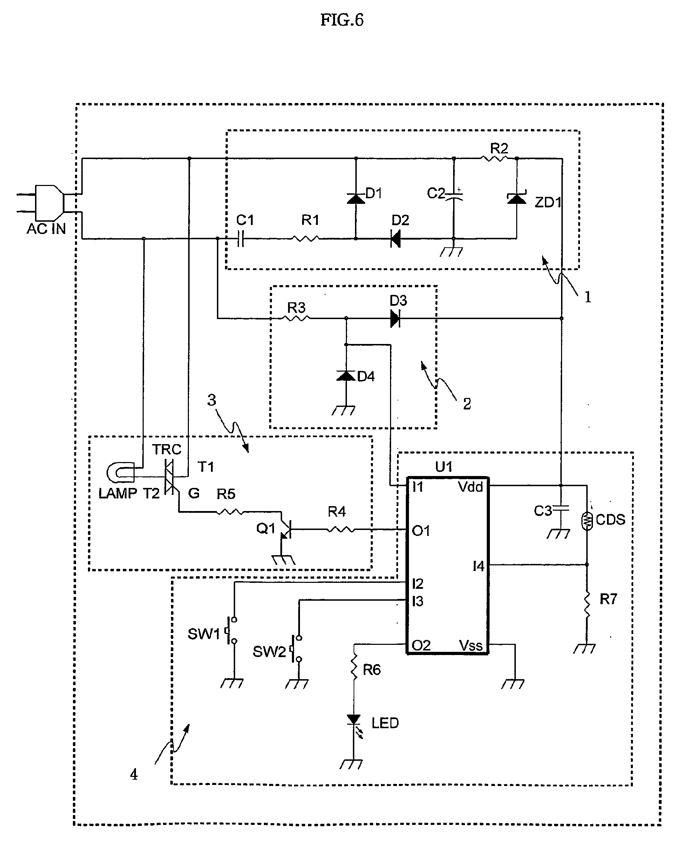

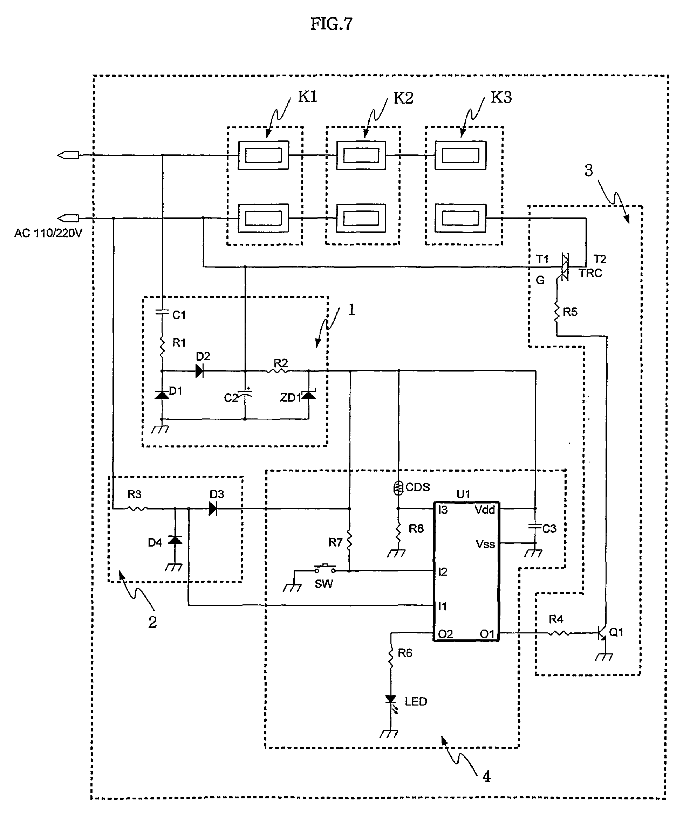

- <Figure 1 >: One of the circuit configuration of normal switches.
- <Figure 2>: One of the circuit configuration of the Switch of this invention.
- <Figure 3>: The Flow Chart of the method for performing security function of this invention.
- <Figure 4>: One of the Timing Drawing of the Switch how to control Lamps when performing the security mode.
- <Figure 5>: One of the external view of the Switch.
- <Figure 6>: One of the circuit configuration of electric stands when the Switch is applied to them.
- <Figure 7>: One of the circuit configuration of electric outlets when the Switch is applied to them.

### Description about symbolic marks of the Switch Drawing

- AC In ;: alternating current Input
- Lamp ;: lighting lamp
- SW In [Out] ;: Switch Input [Output] Terminal
- SW Out [In] ;: Switch Output [Input] Terminal
- 1 ;: Driving Power Circuit Block
- 2 ;: AC Input Phase Detection Circuit Block
- 3 ;: Triac Driving Circuit Block
- 4 ;: Micom and its Surround Circuit Block
- U1 ;: Control Micom
- TRC ;: Triac
- G ;: Gate Terminal of Triac
- I1 ~ 14 ;: No.1 ~ No. 4 Input Terminal of Micom
- O1 ~ O2 ;: No.1 ~ No. 2 Output Terminal of Micom
- SW1 ;: Power [ON.OFF] Switch
- SW2 ;: security Switch
- LED ;: Light emitting diode to show security mode
- CDS ;: luminance sensor
- VDD ;: DC (+) Terminal
- VSS ;: DC Earthling Terminal

### Best Mode for Carrying Out the Invention

<Figure 2> show the circuit configuration of the Switch attached to the Wall, <Figure 6> shows the circuit configuration of the Switch when applied to electric stands, and <Figure 7> shows the circuit configuration of the Switch when applied to electric outlets.

## Claims

1. Apparatus for controlling the ON/OFF switching of a lamp comprising a driving power circuit block (1), an input AC voltage phase detector block (2), a driving circuit (3) comprising an at least one TRIAC (TRC), an LED, a luminance sensor (CDS), a security switch (SW2) to change a setting status between a so called normal mode and a so called security mode, a switch (SW1) which when said setting status is in the so called normal mode, turns said lamp on and off, a microcontroller (U1) provided with a 24 hr clock and an On/Off timer program, **characterised in that** said microcontroller (U1) detects luminance to set its 24 hr clock to 12 a.m. as the central point between sunrise and early evening and to 12 p.m. as the central point between early evening and sunrise.

2. Apparatus according to claim 1, **characterised in that** said On/Off timer program is apted to turn off said lamp during daylight time and to turn said lamp on for a four or five hours time interval after sunset and for a one or two hours time interval before sunrise.

## Patentansprüche

1. Vorrichtung zum Steuern des AN-/AUS-Schaltens einer Lampe, umfassend einen Leistungsansteuerungsschaltkreis (1), einen Eingangs-AC-Spannungsphasendetektorblock (2), einen Ansteuerungsschaltkreis (3), der mindestens einen TRIAC (TRC) umfasst, eine LED, einen Helligkeitssensor (CDS), einen Sicherheitsschalter (SW2), um einen Einstellstatus zwischen einem sogenannten normalen Modus und einem sogenannten Sicherheitsmodus zu ändern, einen Schalter (SW1), der, wenn sich der Einstellstatus in dem sogenannten normalen Modus befindet, die Lampe an- und ausschaltet, einen Mikrocontroller (U1), der mit einer 24 h-Uhr und einem An/Aus-Timerprogramm versehen ist, **dadurch gekennzeichnet, dass** der Mikrocontroller (U1) eine Helligkeit detektiert, um seine 24 h-Uhr auf 12 a.m. als Mitte zwischen Sonnenaufgang und frühem Abend und auf 12 p.m. als Mitte zwischen frühem Abend und Sonnenaufgang zu setzen.

2. Vorrichtung nach Anspruch 1, **dadurch gekennzeichnet, dass** das An/Aus-Timerprogramm geeignet ist, um die Lampe bei Tageslicht auszuschalten, und um die Lampe für einen Zeitraum von vier oder fünf Stunden nach Sonnenuntergang und für einen Zeitraum von ein oder zwei Stunden vor Sonnenaufgang anzuschalten.

## Revendications

1. Appareil pour régler la commutation MARCHE/ARRET d'une lampe comprenant un bloc de circuit de puissance d'entraînement (1), un bloc de détection de phase de tension CA d'entrée (2), un circuit d'entraînement (3) comprenant au moins un TRIAC (TRC), une DEL, un capteur de luminance (CDS), un commutateur de sécurité (SW2) pour changer un état de réglage entre un soi-disant mode normal et un soi-disant mode de sécurité, un commutateur (SW1) qui, lorsque ledit état de réglage se trouve en soi-disant mode normal, met en et hors service ladite lampe, un micro-contrôleur (U1) muni d'une horloge de 24 h et d'un programme d'horloge Marche/Arrêt, **caractérisé en ce que** ledit micro-contrôleur (U1) détecte la luminance pour régler son horloge de 24 h à 12 a.m. comme point central entre le lever du soleil et le début de la soirée et à 12 p.m. comme point central entre le début de la soirée et le lever du soleil.

2. Appareil selon la revendication 1, **caractérisé en ce que** ledit programme d'horloge Marche/Arrêt est apte à mettre hors service ladite lampe pendant le temps de la lumière du jour et pour mettre en service ladite lampe pendant un intervalle de temps de quatre ou cinq heures après le coucher du soleil et pour un intervalle de temps de une ou deux heures avant le lever du soleil.
